# EUROPEAN PATENT SPECIFICATION

(11) **EP 1 839 940 B1**
(45) Date of publication and mention of the grant of the patent: **25.07.2012**
(21) Application number: 07104258.4
(22) Date of filing: 15.03.2007
(51) Int. Cl.: B60N 2/48

(54) **A head restraint for a motor vehicle**
Kopfstütze für ein Kraftfahrzeug
Appui-tête pour véhicule à moteur

(30) Priority: 30.03.2006 US 278083
(43) Date of publication of application: 03.10.2007
(73) Proprietor: Ford Global Technologies, LLC, Dearborn, MI 48126 (US); BGM Engineering, Inc., Shelby Township, MI 48098 (US)
(72) Inventor: Sundararajan, Srinivasan, Ann Arbor, Michigan MI 481004 (US); Mazur, Joseph, Washington, Michigan MI 48094 (US); Burley, Edward, Troy Michigan MI 48085 (US)
(74) Representative: Messulam, Alec Moses

(56) References cited:
- EP-A1- 1 369 310
- DE-A1- 3 440 525
- GB-A- 2 057 255
- GB-A- 2 301 906
- US-A- 5 080 436
- US-A1- 2005 280 304
- US-B1- 6 402 195

## Description

The present invention relates to a head restraint system for a motor vehicle including a headrest with motor driven adjustments for both the height and the horizontal position of the headrest.

Adjustable headrests have been used for many years in automotive vehicles. For optimum effectiveness, such headrests must be adjusted properly. Because achieving a correct adjustment is more difficult in the case of manually adjustable headrests, motor drive headrests have been offered.

U.S. patent 6,511,130 discloses a head restraint assembly comprising a plurality of mounting posts extending generally vertically from a seatback, a head rest carried upon the mounting posts and a mechanism to move the head restraint in a fore and aft directions. The head restraint is adjustable both manually and by means of a motor. The design of this head restraint assembly is, complex, expensive to manufacture and heavy.

U.S. Patent 5,080,436 discloses a head restraint system for a motor vehicle which is considered the closest prior art for claims 1 and 9.

It is an object of the present invention to provide a head restraint system for a motor vehicle that is relatively compact, of low weight and low complexity so as to be economical to produce.

According to a first aspect of the invention there is provided a head restraint system for an automotive vehicle, as set forth in claim 1 of the appended claims.

The first drive mechanism may comprise a height control bar having the base portions of the mounting posts mounted thereto and a linear actuator coupled to the height control bar, for moving the height control bar and the mounting posts vertically.

The linear actuator may comprise a lead screw powered by an electric motor.

Each of the linear actuators may comprise a lead screw powered by a common electric motor.

An indexing mechanism may be driveably connected between the upper eccentric portions of the mounting posts.

The indexing mechanism may comprise a gear train having a respective primary gears locked rotationally to each upper eccentric portion and a plurality of secondary gears in meshed engagement between the primary gears.

The head restraint system may further comprise a controller for operating the first drive mechanism and the second drive mechanism.

The controller may comprise a manual controller.

The controller may have at least a first sensor connected thereto for determining an operating state of a vehicle to which the head restraint system is fitted and a second sensor for determining the position of a head of a passenger with respect to the head rest.

The second sensor comprises a capacitive sensor.

The second sensor may comprise a capacitive sensor housed within the head rest.

The controller may be operable to move the head rest to its lowest and rearmost position if a vehicle within which the head restraint system is installed is determined to be in one of a park and a reverse gear selection condition.

According to a second aspect of the invention there is provided a seat for an automotive vehicle as set forth in claim 7 of the appended claims.

The seat may further comprise a sensor for determining the position of a head of a passenger with respect to the head rest and a controller for operating the first drive mechanism and the second drive mechanism so as to adjust the position of the head rest to establish a predetermined spatial relationship between the head rest and the head of the passenger.

According to a third aspect of the invention there is provided a method of adjusting a passenger head rest in an automotive vehicle having a head restraint system constructed in accordance with said first aspect of the invention, as set forth in claim 9 of the appended claims.

The first drive mechanism may telescopically extend the plurality of headrest mounting posts in a generally vertical direction and the second drive mechanism may cause the mounting posts to rotate such that the eccentric upper portions of the head rest mounting posts reposition the headrest in a horizontal direction.

It is an advantage of a system according to the present invention that a passenger headrest in a vehicle may be adjusted either manually or automatically with precision, so as to achieve a desired position offering enhanced protection for a vehicle occupant.

It is a further advantage of the present invention that the present headrest adjusting system provides enhanced functionality with minimum cost and weight.

It is a further advantage of a system according to the present invention that the present headrest adjusting system may be fully contained within a seat of a vehicle, without the need for external electronic logic support.

The invention will now be described by way of example with reference to the accompanying drawing of which:-
Figure 1 is a schematic representation of an automotive seat according to the present invention;
Figure 2 is a perspective view of a headrest adjusting mechanism according to the present invention;
Figure 3 is a plan view of the top or upper portion of the present headrest adjusting system, taken in the direction of line 3-3 of Figure 2; and
Figure 4 is a block diagram of a control system suitable for use with a headrest adjusting system according to the present invention.

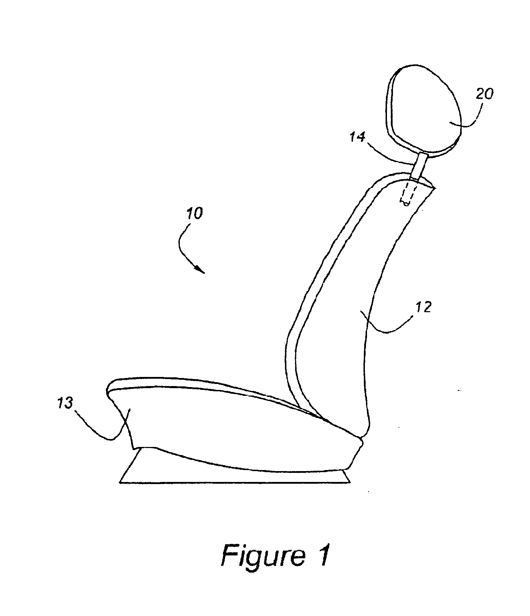

As shown in Figure 1, a seat 10 has seat cushion 13 and seatback 12 mounted on a frame (not shown), incorporating a headrest adjustment mechanism which positions a headrest 20 upon a pair of mounting posts 14. One such post 14 is shown in Figure 1.

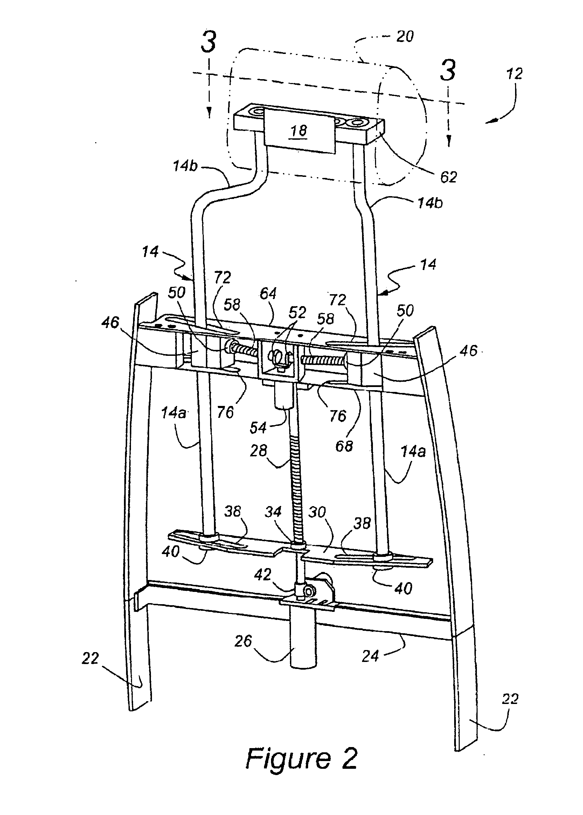

As shown in Figure 2, the two mounting posts 14 provide a foundation for the present headrest adjusting mechanism. Each of the posts 14 has a base portion, 14a and an eccentric portion, 14b. The base portions 14a extend within seatback 12. The lowermost portions of mounting posts 14 are attached to a height control bar 30. The attachment of posts 14a to height control bar 30 is facilitated by post bushings 40, which are fitted so as to accommodate movement in respective slots 38 which are provided within two portions of height control bar 30. As explained more fully below, the slots 38 allow lateral movement of mounting posts 14, so as to facilitate fore and aft movement of headrest 20.

The vertical positioning of mounting posts 14 is facilitated by an elevation motor 26, which drives lead screw 28 through nut 34, which is attached to height control bar 30. Motor 26 is attached to motor mounting bracket 24, which extends between sides 22 of the seat frame. As motor 26 turns in response to command from a controller, lead screw 28 will turn within nut 34, which will cause height control bar 30 to move either up or down, thereby moving mounting posts 14 and headrest 20 up or down as commanded.

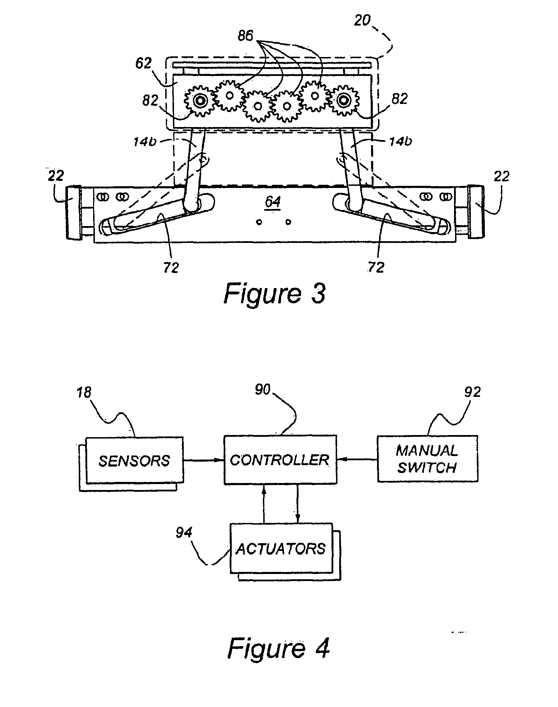

A system controller 90 (Figure 4) reads the actual height of headrest 20 by means of height control sensor 42, which may, for example, be a multi-turn potentiometer geared to either motor 26 or to lead screw 28. Those skilled in the art will appreciate in view of this disclosure that other types of position sensors, such as a linear potentiometer or a linear variable differential transformer may be used with a system according to the present invention. The measured height of headrest 20 is compared with the position of the passenger's head, which is detected by an occupant sensor 18. Although occupant sensor 18 is preferably of the capacitive type, the present system may utilize other types of sensors known to those skilled in the art and suggested by this disclosure.

Mounting posts 14 extend generally vertically through post bearings 46 which are mounted at the upper portion of seat frame 22. As with the lowermost portions of mounting post 14, the middle portions of posts 14 extending through post bearings 46 may be displaced laterally in response to the fore and aft adjusting mechanism. This lateral movement is allowed by slots 72 formed in upper angle plate 64 and slots 76 formed in lower angle plate 68. Fore and aft motor 54 rotates a set of three bevel gears 52, so as to drive two lead screws 58 which are driven into nuts 50 housed within post bearings 46.

When motor 54 rotates, mounting posts 14 will be moved either closer to each other or away from each other by the action of lead screws 58. In the event that mounting posts 14 are moved closer to each other, headrest 20 will be caused to move closer to the passenger's head. This results from the kinematics shown in Figure 3, where it is seen that as base portions 14a move inwardly in slots 72 formed in upper angle plate 64, eccentric portions 14b are rotated forwardly because of their linkage within headrest 20.

During rotation of the mounting posts 14, primary gears 82, which are rotationally locked to eccentric portions 14b of posts 14, will rotate with eccentric portions 14b, and secondary gears 86, which are imposed between primary gears 82, will assure that rotation of each of the mounting posts 14 is equal. This indexing mechanism will maintain the desired parallel relationship between the seatback and headrest 20.

Controller 90, which is shown in Figure 4, may be drawn either from a class of microprocessor controllers commonly employed to operate vehicular seating systems or from other types of controllers known to those skilled in the art and suggested by this disclosure. In any event, operation of controller 90 to adjust headrest 20 may be initiated either by manual switch 92 or by feedback provided by sensor 18. Sensor 18 may include a proximity sensor, such as a capacitive sensor mounted within headrest 20. Other sensors useful with the present invention may include sensors measuring vehicle parameters, such as transmission gear selection and occupant sensing.

In general, controller 90 will cause headrest 20 to be adjusted only if the seat 10 is occupied and if the vehicle is in a forward drive gear. If, on the other hand, the vehicle is in a reverse drive gear, or in park condition, headrest 20 may be placed in its lowermost and rearmost position, so as to promote the driver's ability to view the surrounding landscape through the back window of the vehicle.

As further shown in Figure 4, controller 90 operates a plurality of actuators 94, which include the actuators driven by elevation motor 26 and fore and aft motor 54.

The controller is programmed to perform a method comprising several steps including activating a head proximity sensor located in the headrest and activating a first drive mechanism to adjust the vertical position of the headrest based upon a signal from the proximity sensor. The method may further include the step of activating a second drive mechanism to adjust the horizontal position of the headrest based upon the signal from the proximity sensor.

## Claims

1. A head restraint system for an automotive vehicle, comprising a plurality of mounting posts (14) extending generally vertically from a seatback (12), a head rest (20) carried upon the mounting posts (14) and a mechanism to move the head rest (20) in fore and aft directions wherein each of the mounting posts (14) has a lower base portion (14a) with a longitudinal axis and an upper eccentric portion (14b) upon which is carried the head rest (20) and that a first drive mechanism (26, 28, 30) is coupled to the base portion (14a) of each of the mounting posts (14) for extending and retracting the mounting posts (14) relative to the seatback (12) so as to raise and lower the head rest and a second drive mechanism (50, 52, 54, 58) for rotating the mounting posts (14) about the longitudinal axes so as to move the head rest (20) in the fore and aft directions
**characterised in that** the second drive mechanism comprises a respective linear actuator (52, 54, 58) coupled to the base portion (14a) of each of the mounting posts (14), the linear actuators (52, 54, 58) being operable to move the base portions (14a) of the mounting posts (14) laterally in opposite directions.

2. A head restraint system as claimed in Claim 1
wherein the first drive mechanism comprises a height control bar (30) having the base portions (14a) of the mounting posts (14) mounted thereto and a linear actuator (26, 28) coupled to the height control bar (30) for moving the height control bar (30) and the mounting posts (14) vertically.

3. A head restraint system as claimed in any preceding claim, wherein an indexing mechanism (82, 86) is driveably connected between the upper eccentric portions (14b) of the mounting posts (14).

4. A head restraint system as claimed in any preceding claim, further comprising a controller (90) for operating the first drive mechanism (26, 28, 30) and the second drive mechanism (50, 52, 54, 58).

5. A head restraint system as claimed in claim 4,
wherein the controller (90) has at least a first sensor (18) connected thereto for determining an operating state of a vehicle to which the head restraint system is fitted and a second sensor (18) for determining the position of a head of a passenger with respect to the head rest (20).

6. A head restraint system as claimed in claim 4 or 5, wherein the controller (90) is operable to move the head rest (20) to its lowest and rearmost position if a vehicle within which the head restraint system is installed is determined to be in one of a park and a reverse gear selection condition.

7. A seat (10) for an automotive vehicle comprising a seat frame, a seat cushion (13) mounted to the seat frame, a seatback (12) mounted to the seat frame and a head rest (20) **characterised in that** the seat (10) further comprises a head restraint system as claimed in any of claims 1 to 6 to adjust the position of the head rest (20).

8. A seat as claimed in claim 7, wherein the seat further comprises a sensor (18) for determining the position of a head of a passenger with respect to the head rest (20) and a controller (90) for operating the first drive mechanism (26, 28, 30) and the second drive mechanism (50, 52, 54, 58) so as to adjust the position of the head rest (20) to establish a predetermined spatial relationship between the head rest (20) and the head of the passenger.

9. A method of adjusting a passenger head rest in an automotive vehicle having a head restraint system as claimed in any of claims 1 to 6, the method comprising the steps of
activating a head proximity sensor (18) located in the head rest (20),
activating the first drive mechanism (26, 28, 30) to adjust the vertical position of the head rest (20) based upon a signal from the proximity sensor (18) and
activating the linear actuators to adjust the horizontal position of the head rest (20) based upon the signal from the proximity sensor.

## Patentansprüche

1. Ein Kopfstützensystem für ein Kraftfahrzeug, bestehend aus einer Vielzahl von Befestigungsstangen (14), die sich gewöhnlich vertikal von einer Rückenlehne (12) aus erstrecken, einer Kopfstütze (20), die von den Befestigungsstangen (14) getragen wird, und einem Mechanismus, um die Kopfstütze (20) der Länge nach zu bewegen, wobei jede der Befestigungsstangen (14) einen unteren Basisabschnitt (14a) mit einer Längsachse und einem oberen außermittigen Abschnitt (14b), von dem die Kopfstütze (20) getragen wird, aufweist, wobei eine erste Antriebsmechanik (26, 28, 30) mit dem Basisabschnitt (14a) jeder Befestigungsstange (14) verbunden ist, damit die Befestigungsstangen (14) zum Höher- und Tieferstellen der Kopfstütze im Verhältnis zur Rückenlehne (12) ein- und ausgefahren werden können und eine zweite Antriebsmechanik (50, 52, 54, 58) dazu dient, die Befestigungsstangen (14) um die Längsachse zu drehen, um die Kopfstütze (20) der Länge nach zu bewegen;
**dadurch gekennzeichnet, dass** die zweite Antriebsmechanik einen entsprechenden Linearaktuator (52, 54, 58) beinhaltet, der an den Basisabschnitt (14a) jeder Befestigungsstange (14) gekoppelt ist, wobei die Linearaktuatoren (52, 54, 58) dazu dienen, die Basisabschnitte (14a) der Befestigungsstangen (14) lateral in entgegengesetzte Richtungen zu verschieben.

2. Ein Kopfstützensystem, wie in Anspruch 1 beansprucht, worin die erste Antriebsmechanik einen Stab zur Höhenregulierung (30) aufweist, wobei die Basisabschnitte (14a) der Befestigungsstangen (14) daran befestigt sind und ein Linearaktuator (26, 28) an den Stab zur Höhenregulierung (30) gekoppelt ist, um den Stab zur Höhenregulierung (30) und die Befestigungsstangen (14) vertikal zu verschieben.

3. Ein Kopfstützensystem, wie in einem der vorhergehenden Ansprüche beansprucht, worin ein Rastmechanismus (82, 86) fahrbar mit den oberen außermittigen Abschnitten (14b) und den Befestigungsstangen (14) verbunden ist.

4. Ein Kopfstützensystem, wie in einem der vorhergehenden Ansprüche beansprucht, das überdies eine Steuerung (90) zum Betrieb der ersten Antriebsmechanik (26, 28, 30) und der zweiten Antriebsmechanik (50, 52, 54, 58) beinhaltet.

5. Ein Kopfstützensystem, wie in Anspruch 4 beansprucht, worin die Steuerung (90) mindestens einen damit verbundenen ersten Sensor (18) aufweist, um einen Betriebszustand eines Kraftfahrzeugs, in dem die Kopfstütze montiert ist, zu ermitteln, und einen zweiten Sensor (18), um die Position des Kopfs eines Insassen im Hinblick auf die Kopfstütze (20) zu ermitteln.

6. Ein Kopfstützensystem, wie in Anspruch 4 oder 5 beansprucht, worin die Steuerung (90) dazu dient, die Kopfstütze (20) auf ihre niedrigste und hinterste Position zu verschieben, wenn festgestellt wird, dass ein Kraftfahrzeug, in dem die Kopfstütze montiert ist, sich in einem Park- oder Rückwärtsgangwahl-Zustand befindet.

7. Ein Sitz (10) für ein Kraftfahrzeug, der einen Sitzrahmen, ein am Sitzrahmen befestigtes Sitzkissen (13), eine am Sitzrahmen befestigte Rückenlehne (12) sowie eine Kopfstütze (20) umfasst, **dadurch gekennzeichnet, dass** der Sitz (10) überdies ein Kopfstützensystem, wie in einem der Ansprüche 1 bis 6 beansprucht, beinhaltet, um die Position der Kopfstütze (20) einzustellen.

8. Ein Sitz, wie in Anspruch 7 beansprucht, worin der Sitz überdies einen Sensor (18) zur Ermittlung der Position eines Insassen im Hinblick auf die Kopfstütze (20) umfasst, sowie eine Steuerung (90) zum Betrieb der ersten Antriebsmechanik (26, 28, 30) und der zweiten Antriebsmechanik (50, 52, 54, 58), um die Position der Kopfstütze (20) einzustellen, damit eine vorher festgelegte räumliche Beziehung zwischen der Kopfstütze (20) und dem Kopf des Insassen hergestellt wird.

9. Eine Methode zur Einstellung einer Kopfstütze für den Insassen in einem Kraftfahrzeug, das ein Kopfstützensystem, wie in einem der Ansprüche 1 bis 6 beansprucht, aufweist, wobei die Methode die folgenden Schritte umfasst:
Aktivierung eines Kopf-Näherungssensors (18), der sich in der Kopfstütze (20) befindet,
Aktivierung der ersten Antriebsmechanik (26, 28, 30) zur Einstellung der Vertikalposition der Kopfstütze (20) basierend auf einem Signal vom Kopf-Näherungssensors (18) und
Aktivierung des Linearaktuators, um die horizontale Position der Kopfstütze (20) basierend auf dem Signal vom Näherungssensor einzustellen.

## Revendications

1. Un système de retenue de tête pour un véhicule automobile, comprenant une pluralité de montants (14) s'étendant d'une manière généralement verticale à partir d'un dossier (12), un appui-tête (20) fixé sur les montants (14) et un mécanisme destiné à déplacer l'appui-tête (20) dans des directions longitudinales où chacun des montants (14) possède une partie de base inférieure (14a) avec un axe longitudinal et une partie excentrique supérieure (14b) sur laquelle est fixé l'appui-tête (20) et où un premier mécanisme d'entraînement (26, 28, 30) est couplé à la partie de base (14a) de chacun des montants (14) de façon à étendre et rétracter les montants (14) par rapport au dossier (12) de façon à rehausser et abaisser l'appui-tête et un deuxième mécanisme d'entraînement (50, 52, 54, 58) destiné à faire pivoter les montants (14) autour des axes longitudinaux de façon à déplacer l'appui-tête (20) dans les directions longitudinales,
**caractérisé en ce que** le deuxième mécanisme d'entraînement comprend un actionneur linéaire respectif (52, 54, 58) couplé à la partie de base (14a) de chacun des montants (14), les actionneurs linéaires (52, 54, 58) étant actionnables de façon à déplacer les parties de base (14a) des montants (14) latéralement dans des directions opposées.

2. Un système de retenue de tête selon la Revendication 1 où le premier mécanisme d'entraînement comprend une barre de réglage de la hauteur (30) avec les parties de base (14a) des montants (14) fixées sur celle-ci et un actionneur linéaire (26, 28) couplé à la barre de réglage de la hauteur (30) destiné à déplacer la barre de réglage de la hauteur (30) et les montants (14) verticalement.

3. Un système de retenue de tête selon l'une quelconque des Revendications précédentes, où un mécanisme d'encliquetage (82, 86) est raccordé par entraînement entre les parties excentriques supérieures (14b) des montants (14).

4. Un système de retenue de tête selon l'une quelconque des Revendications précédentes, comprenant en outre un système de commande (90) destiné à actionner le premier mécanisme d'entraînement (26, 28, 30) et le deuxième mécanisme d'entraînement (50, 52, 54, 58).

5. Un système de retenue de tête selon la Revendication 4, où le système de commande (90) possède au moins un premier capteur (18) raccordé à celui-ci destiné à déterminer un état de fonctionnement d'un véhicule sur lequel le système de retenue de tête est installé et un deuxième capteur (18) destiné à déterminer la position d'une tête d'un passager par rapport à l'appui-tête (20).

6. Un système de retenue de tête selon la Revendication 4 ou 5, où le système de commande (90) est actionnable de façon à déplacer l'appui-tête (20) vers sa position la plus basse et la plus reculée si un véhicule à l'intérieur duquel le système de retenue de tête est installé est déterminé se trouver dans une condition de sélection d'engrenage parmi les conditions de sélection point mort et marche arrière.

7. Un siège (10) pour un véhicule automobile comprenant une armature de siège, un coussin de siège (13) monté sur l'armature de siège, un dossier (12) monté sur l'armature de siège et un appui-tête (20) **caractérisé en ce que** le siège (10) comprend en outre un système de retenue de tête selon l'une quelconque des Revendications 1 à 6 destiné à régler la position de l'appui-tête (20).

8. Un siège selon la Revendication 7, où le siège comprend en outre un capteur (18) destiné à déterminer la position d'une tête d'un passager par rapport à l'appui-tête (20) et un système de commande (90) destiné à actionner le premier mécanisme d'entraînement (26, 28, 30) et le deuxième mécanisme d'entraînement (50, 52, 54, 58) de façon à régler la position de l'appui-tête (20) et d'établir une relation spatiale prédéterminée entre l'appui-tête (20) et la tête du passager.

9. Un procédé de réglage d'un appui-tête de passager dans un véhicule automobile possédant un système de retenue de tête selon l'une quelconque des Revendications 1 à 6, le procédé comprenant les opérations suivantes :
l'activation d'un capteur de proximité de tête (18) placé dans l'appui-tête (20),
l'activation du premier mécanisme d'entraînement (26, 28, 30) de façon à régler la position verticale de l'appui-tête (20) en fonction d'un signal provenant du capteur de proximité (18), et
l'activation de l'actionneur linéaire de façon à régler la position horizontale de l'appui-tête (20) en fonction du signal provenant du capteur de proximité.
